# EUROPEAN PATENT APPLICATION

(11) **EP 1 924 069 A1**
(43) Date of publication of application: **21.05.2008**
(21) Application number: 07120181.8
(22) Date of filing: 07.11.2007
(51) Int. Cl.: H04M 1/725

(54) **Telecommunication device for transmitting an emergency message**

(30) Priority: 14.11.2006 GB 0622666
(71) Applicant: Promotion and Display Technology Limited, M6 6AR Greater Manchester Salford (GB)
(72) Inventor: Holder, David, Salford, Greater Manchester M7 4EL (GB)
(74) Representative: Davies, Robert Ean

(57) **Abstract**

Disclosed is an emergency telecommunication device for use with a mobile telephone, comprising: a housing for being worn or carried about the person of a user, the housing comprising means arranged to facilitate communication with the mobile telephone, a loudspeaker and a microphone, the device being operable to transmit an emergency message, via the mobile telephone, to at least one pre-stored emergency telephone number in response to a user-initiated operation.

## Description

The present invention relates to a telecommunication device which can operate as an emergency aid, which finds particular but not exclusive use by elderly or infirm people and is able to offer them a degree of reassurance and security when out and about.

They are currently available prior art emergency pendant systems which comprise a small pre- programmed transmitter which is worn around the neck of the user when in the house and, if the user falls or suffers any kind of accident, a button on the pendant may be activated which triggers the home fixed line telephone system to dial a pre-programmed telephone number and play a pre-recorded message when the call is answered. These systems are intended to call, perhaps, a central monitoring service which can then send out a warden to investigate, or call the emergency services if necessary. Insofar as these systems provide some security around a user's home, they are quite effective and do offer a degree of reassurance to the user. However, for users who still enjoy a degree of mobility, such prior art systems are not able to operate outside the home environment.

It is an aim of the embodiments of the present invention to provide an emergency communication system for users away from a home environment but which does not require any specialist technical knowledge on the part of the user to operate it.

Embodiments of the present invention aim to address problems with the prior art whether disclosed herein or not.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 shows a view of a first embodiment of the present invention comprising a pendant and a base unit;

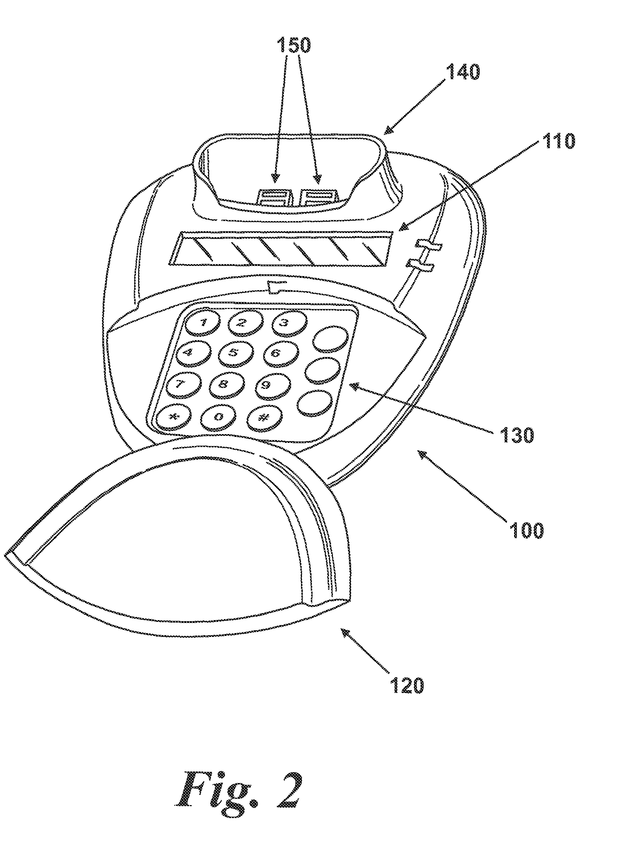

Figure 2 shows the base unit of figure 1 in more detail;

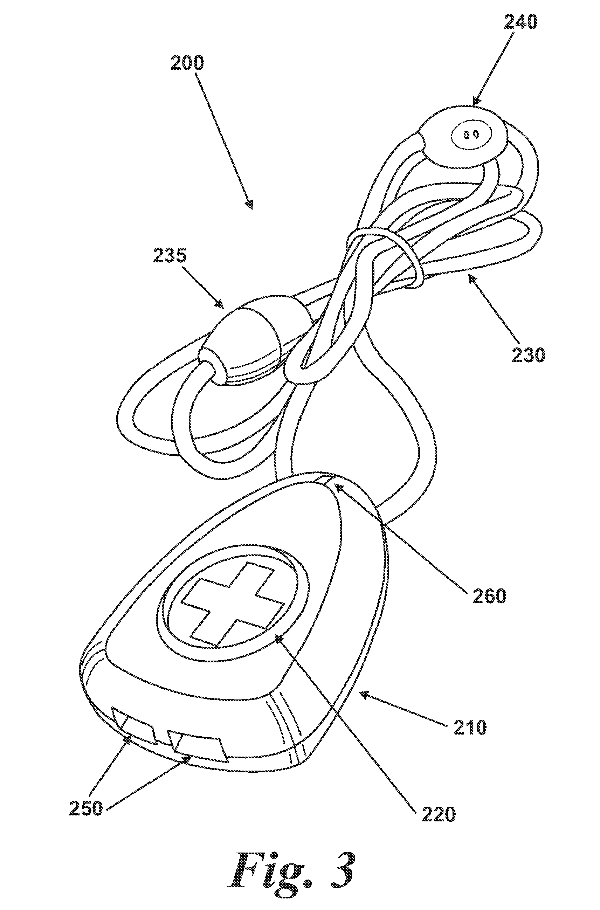

Figure 3 shows the pendant of figure 1 in more detail; and
Figure 4 shows a schematic view of the major functional parts of the pendant of Figure 3.

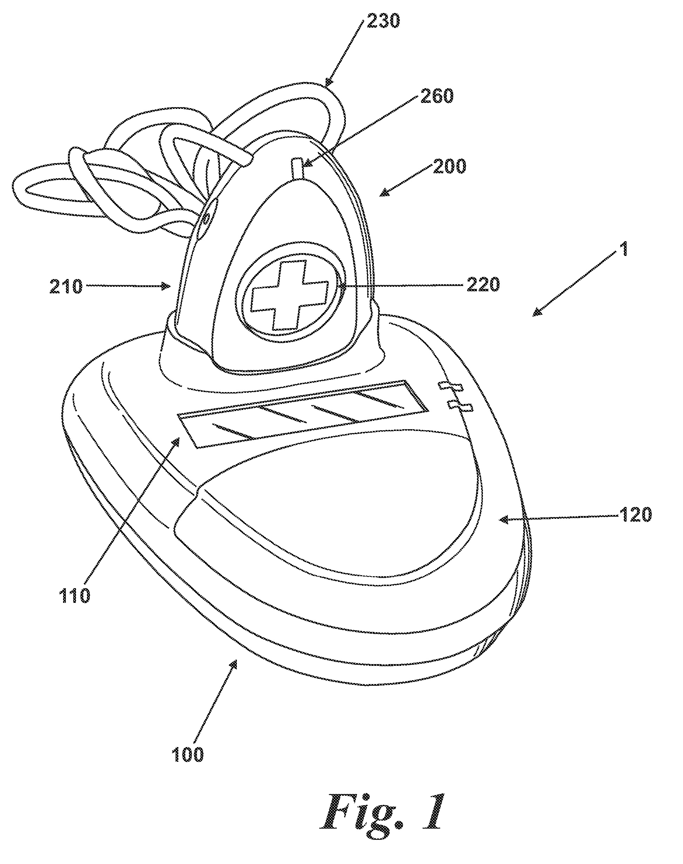

Figure 1 shows an embodiment of the present invention comprising a base unit 100 and a pendant unit 200 coupled thereto. In use, a user of the unit places the pendant 200 around their neck so that it is easily accessible in case of emergency. A neck strap 230 is provided for this purpose. If the user finds themselves in difficulty e.g. by falling or feeling unwell whilst out and about, the user is able to activate the unit by pressing button 220 which operates to summon assistance as will be described shortly.

The pendant 200 comprises a body portion 210 in which is housed a low power RF (LPRF) transceiver, preferably operable according to the Bluetooth ® standard. The transceiver in the pendant 200 is able to be paired with an appropriate mobile telephone, also operable to the Bluetooth ® standard. In this way, the pendant is able to communicate with the mobile telephone. This interaction between the pendant 200 and the mobile telephone allows an emergency message to be transmitted from the mobile telephone and initiated by the pendant in response to the user pushing button 220.

One or more emergency contact numbers are stored in the pendant by a procedure which will be described shortly. In use, if the user experiences difficulty and wishes to summon assistance, the button 220 is pressed and held down for a short period of time (so as to avoid problems with accidental activation of the button). Once the emergency mode is entered in this way the LED 260 located at the top of the pendant body 210 will flash to alert the user to the fact that the emergency mode has been entered.

When entering emergency mode in this way, the pendant 200 communicates with the paired mobile telephone to dial the one or more pre-stored emergency contact numbers, in sequence, to alert the one or more contacts that the user is in difficulty and requires assistance.

In contrast to the prior art systems which make use of a fixed line telephone, embodiments of the present invention benefit from the enhanced communication capabilities of the Bluetooth® pairing between the pendant 200 and the mobile telephone. Integrated into the cord 230 of the pendant 200 is a microphone 240 which allows the user to communicate with the recipient of the emergency telephone call, thereby enabling them to provide further details of any incident or accident which has befallen them.

As an example scenario, a user of the pendant 200 suffers a fall whilst out shopping and requires assistance, but there is nobody at hand to help. Upon pushing the button 220, the pendant operates to instruct the mobile telephone to dial the first in a list of pre-stored emergency contact numbers. The pendant has been previously pre-programmed with an emergency outgoing message which incorporates the name of the user. By pressing the button for a period of 2 seconds or longer, the emergency mode is entered and the red LED 260 begins to flash to confirm this to the user. At the same time, the pendant instructs the mobile telephone to create a call to a first telephone number.

When the call is answered, a pre recorded message is relayed to the called number. An example may be "this is John Smith, I need assistance". There then follows a further voice prompt which is pre-stored in the pendant. This may say "press the hash key to be connected" or "press any number key to be connected" or some other such instruction. The recipient of the emergency call can thereby press the appropriate key on his telephone and be connected directly to the user of the pendant, who requires assistance. In this way, the recipient is able to glean further information about the nature of the incident and the location of the user of the pendant so that suitable assistance may be summoned.

If a suitable response is not received from the dialled number within a short predetermined period, then the next number in the list is dialled, and so on.

A current call can be aborted in a number of ways. For instance, the call may be terminated by either party. The recipient may simply hang up or the user of the device may push button 220 to leave the emergency mode.

The list of emergency numbers will be dialled repeatedly until a successful outcome occurs i.e. a suitable response is received from the recipient. Once this happens, the call is kept active so that the user of the device may be comforted and kept informed that assistance is coming.

An advantage of providing the microphone 240 and an integrated loud speaker (not shown) on the pendant 200 is that in an emergency situation, the user is able to converse with one of their emergency contacts and does not require any knowledge of the workings of the mobile telephone which is paired with the pendant 200. This is particularly advantageous for elderly users of such a device who are less likely to be able to operate a mobile telephone, particularly if distressed or injured.

The microphone 240 is provided integral to the cord 230 so that it is situated appropriately and to be relatively close to the user's mouth when the pendant is hanging freely.

The cord 230 is provided with a relatively weak portion 235, possibly provided by a push-fit connector, so that the pendant does not pose a choking hazard to the user. If the user does somehow become entangled, then the cord 230 is designed to come apart at the weak spot 235.

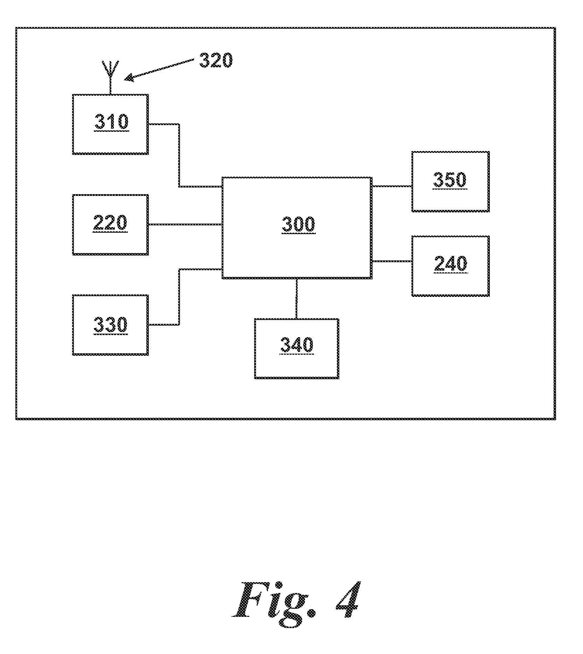

Figure 4 shows a schematic representation of the major functional parts of the pendant 200. The operation of the pendant is controlled by microprocessor 200, which is provided with the usual working memory and storage memory.

The microprocessor 300 controls all the operations of the pendant and is programmed accordingly. It specifically controls the link to the base unit 100 and the Bluetooth® LPRF connection to the paired mobile telephone.

Connected to the microprocessor 200 is a Bluetooth® module 310, which incorporates the circuitry necessary to pair the pendant with a suitable mobile telephone. Such modules are readily available from a number of sources, such as Cambridge Silicon Radio (www.csr.com). The Bluetooth® module 310 comprises an integrated antenna 320.

Under the control of the microprocessor, the Bluetooth module 310 is operable to search for a suitable mobile telephone with which to pair and to perform the necessary handshaking to set up the link. The pendant 200 may be provided with an indicator LED 260, which is operable to illustrate pairing status.

Also connected to the microprocessor 300 is the emergency button 220, which is one of two user-operable controls on the pendant (the other being the on/off button 270). Activation of this button causes the pendant to enter the emergency mode. However, in order to reduce the risk of false alarms, this mode is only activated if the button 220 is held down for a predetermined period (e.g. 2 seconds). The microprocessor is programmed to ignore presses of shorter durations.

Loudspeaker 350 and microphone 240 are connected to the microprocessor, which is operable to convert analog signals to and from digital signals for the purposes of passing voice information to the paired mobile telephone via the Bluetooth® module 310.

The pendant 200 is powered by an internal rechargeable battery 330, which is sufficient to provide several hours or even days of use in normal circumstances. The battery is recharged when the pendant is placed in the base unit 100. Power is provided from the base unit 100 to the pendant 200 via the connectors 340 and 250.

Connectors 250 and 340 also serve as a data connection, allowing the base unit 100 and the pendant 200 to communicate, when the pendant is placed in the docking connector 140 of the base unit. In this way, the base unit is able to pass the details of the pre-stored emergency numbers to the microprocessor 300 for storage and possible future use in an emergency.

In order to set up the pendant for use in an emergency situation, it is necessary to pre-program it with one or more emergency contact numbers and a brief outgoing message so that any emergency call can be suitably dealt with. All programming of the pendant 200 is performed via the base unit 100

The base unit is provided with a movable cover 120, which, in normal use, conceals the keys 130 required to perform programming of the pendant. Once the cover is rotated and the keys are revealed, the emergency numbers which are to be stored in the pendant can be entered.

Assuming the pendant currently includes no stored numbers, then the procedure to be followed is:
- Insert the pendant 200 into the docking connector of the base unit 100. The display shows a message indicating that the pendant has been detected successfully.
- Press and hold the STORE key until a beep is emitted. The display now shows a message "Store number".
- The emergency number is entered and STORE is pressed again to confirm. (The DELETE key may be used to remove any digits entered incorrectly.)
- The display now shows the message "Location?"
- A number from 1 to 5 is entered to signify which of the 5 storage locations is to be used to store the number.
- The emergency number is uploaded to the pendant and a message is displayed on the display indicating this.
- Additional emergency numbers may be stored in the same manner.

To check the details of stored numbers, the STORE key is pressed, followed by any of the keys 1-5. The number stored in the selected location is displayed.

As well as the emergency numbers, it is also necessary to record an emergency outgoing message (EOGM). With the pendant located in the docking port 140, the EOGM key is pressed, and a suitable message is recorded. The EOGM key is pressed again to end the recording.

The base unit 100 is provided with a mains power supply, which in turn is converted into a low voltage DC supply for powering the circuitry of the base unit and for re-charging the pendant when positioned in the docking port 140.

To use the pendant, the on/off button 270 is depressed for a first period (e.g. 2 seconds). To switch it off, the on/off button must be depressed for a second period (e.g. 4 seconds). Again, this is to reduce the risk of accidental de-activation.

To use the pendant 200 with a suitable mobile telephone, it is first necessary to perform a pairing operation. In order to initiate this process, the on/off button 270 must be depressed for a third, relatively long period (e.g. 7 seconds). The LED on the pendant will flash in alternate colours to indicate pairing mode has been entered. The pairing operation is then completed using the controls of the mobile telephone, according to its particular mode of operation. Once the pairing is set up for a particular mobile device, it need not be repeated unless the mobile telephone with which the device is used is changed.

Although described particularly as a pendant, the device according to an embodiment of the invention could also be provided in other forms, providing ready access to the user. For instance, the device may be embodied in the form of a brooch wearable on an item of clothing.

The pendant 200 is provided as a sealed unit with no user-serviceable parts. As such, it is at least partially waterproof and able to withstand normal use in a variety of weather conditions e.g. rain

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An emergency telecommunication device for use with a mobile telephone, comprising:
a housing for being worn or carried about the person of a user, the housing comprising means arranged to facilitate communication with the mobile telephone, a loudspeaker and a microphone, the device being operable to transmit an emergency message, via the mobile telephone, to at least one pre-stored emergency telephone number in response to a user-initiated operation.

2. The device as claimed in claim 1 wherein the means provided to communicate with the mobile telephone is a Low Power Radio Frequency (LPRF) link.

3. The device as claimed in claim 2 wherein the LPRF link is a Bluetooth® link.

4. The device as claimed in any preceding claim wherein, in order to enter an emergency mode, the user operates a key provided for this purpose on the device.

5. The device as claimed in claim 4 wherein the key is depressed for a predetermined period such that accidental transient actuations may be ignored.

6. The device as claimed in claim 4 or 5 wherein the device is operable to dial, via the mobile telephone, the at least one emergency telephone number and transmit a pre-stored Emergency Outgoing Message (EOGM).

7. The device as claimed in claim 6 wherein, upon receiving the EOGM, the recipient is able to communicate verbally with the user via means of the loudspeaker and microphone.

8. The device as claimed in any preceding claim further comprising a base unit, with which the device may be coupled for the purposes of charging an internal battery of the device and programming the at least one emergency telephone number and the EOGM.

9. The device as claimed in claim 8 wherein the base unit comprises a plurality of keys for entering data, which is transferred to the device.

10. The device as claimed in any preceding claim, wherein the device is provided with a cord for placement about the neck of the user.

11. The device as claimed in claim 10 wherein the microphone is provided in the cord.
